# EUROPEAN PATENT APPLICATION

(11) **EP 4 614 742 A1**
(43) Date of publication of application: **10.09.2025**
(21) Application number: 25158355.5
(22) Date of filing: 17.02.2025
(51) Int. Cl.: H02G 1/08

(54) **DEVICE FOR DRIVING AND BENDING AND/OR STRAIGHTENING OF AT LEAST ONE CABLE**

(30) Priority: 08.03.2024 NL 2037203
(71) Applicant: Matador Exploitatie B.V., 5268 AS Helvoirt (NL)
(72) Inventor: BELGERS, Paul Anton Gerard Marie, 5268 AS Helvoirt (NL)
(74) Representative: Patentwerk B.V.

(57) **Abstract**

The present invention is related to a device for driving and bending of at least one cable, in particular an electricity cable, more in particular for use in tight and/or spaces with limited height comprising: at least one drive section, for forcing of a cable in a feeding direction comprising at least two spaced apart and opposing drive rolls, preferably a bottom drive roll and an upper drive roll, for mutually engaging with the at least one cable, wherein at least one of the at least two drive rolls is driven, at least one cable bending section, located downstream of the at least one drive section and comprising at least one bending roll, wherein the position of the bending roll is adjustable, in particular a height of the at least one bending roll with respect to the drive rolls, for allowing of adjusting the bending radius of the at least one cable, at least one cable aiming section, preferably located downstream of the at least one bending section, for adjusting of a cable output direction, preferably wherein said at least one cable aiming section comprises at least one aiming roll, in particular wherein a position of said aiming roll with respect to the cable is adjustable, wherein said aiming roll and bending roll are configured to engage with a cable at mutually opposing sides of said cable.

## Description

The present invention is related to a device for driving and bending and/or straightening of at least one cable, in particular an electricity cable, in particular in tight spaces and/or spaces with limited height.

In the present days, loads on the electricity network is getting bigger and bigger, not only due to a raising demand, but also due to the increasing number of solar panels which may be a burden to the electricity network. Therefore, electricity cables tend to get bigger and bigger, and hence also heavier. Due to the bigger and heavier cables it is becoming increasingly cumbersome for working people to manually provide these cables. For example a transformer building may require maintenance to replace old cables for newer cables, or a new transformer building needs to be placed in order to prevent the electricity network from being overloaded. Generally, these buildings comprise only very small basements or cellars where the cables enter the building. The working people need to get into these basements and manually guide the cable to a predefined location. It is very difficult to bend the very heavy cable upwardly. In particular due to the tight space. The same applies to a crawl space under a house or building. When new cables are routed towards the house, this is where the working people need to move cables which can be very heavy. Not only do the people need to bend the cables in these tight spaces, they must also pull the cable such that it is fed through an opening in the basement of the building.

Although there are devices which are able to feed cables, these devices generally are not suitable for use in tight spaces due to their size. Moreover, this still requires a working person to bend the cable into the right direction whilst sitting, or laying, in the tight spaces.

Hence, it is a first goal of the present invention to provide for a device for feeding and bending or straightening of cables, in particular electricity cables, in a tight space.

It is a second goal to provide a device which allows working people to move and bend a cable safely in a tight space without excessive manual power.

**The present** invention thereto provides a device for driving and bending and/or straightening of at least one cable, in particular an electricity cable, more in particular for use in tight and/or spaces with limited height comprising:
- at least one drive section, for forcing of a cable, preferably via or through a frame if applied, in a feeding direction comprising;
   ∘ at least one drive roll, preferably at least two spaced apart, and more preferably opposing, drive rolls, preferably a bottom drive roll and an upper drive roll and/or a pair of opposing lateral rolls, for mutually engaging with the at least one cable, wherein at least one of the at least two drive rolls is driven,
- at least one cable bending section, located downstream, in particular downstream in the feeding direction, of the at least one drive section and comprising at least one bending roll,

preferably, wherein the position of the bending roll is adjustable, in particular a height of the at least one bending roll with respect to the drive rolls, for allowing of adjusting the bending radius of the at least one cable
   - optionally, at least one cable aiming section, preferably located downstream of the at least one bending section , in particular downstream in the feeding direction, for adjusting of a cable output direction, preferably wherein said at least one cable aiming section comprises at least one aiming roll, in particular wherein a position of said aiming roll with respect to the cable is adjustable,
wherein said aiming roll and bending roll are configured to engage with a cable at opposing sides of said cable.

Due to the device comprising both a drive and a bending section it is possible to simultaneously feed and bend and/or straighten a cable. The device is particularly compact and easily installable in tight spaces. The device is particularly configured for pushing and/or pulling of cables, whilst simultaneously bending and/or straightening. The adjustable bending roll allows for adjusting of the bending radius induced to the cable. Preferably, an aiming section allows for aiming the cable into a preferred exit direction. Said exit direction may be substantially perpendicular to the feeding direction. The exit direction of the cable may be substantially vertical. The drive section may apply a driving force of at least 750 N, more preferably at least 1000 N, in particular at least 1300 N to the cable. In addition the bending section may comprise at east one stationary roller, located upstream of the adjustable bending roller.

The device may comprises a frame, wherein the drive section, bending section, and aiming section are mounted to, or form part of, said frame. The frame may be formed by a driving section subframe, a bending section subframe, and an aiming section subframe which are mutually connected or connectable. It is furthermore conceivable that the aiming section subframe and/or bending section subframe is connectable on either side of the drive section, which allows for more freedom of operation for a user. Preferably, said frame sections mutually form the frame. Since the frame sections may be mounted to one another, de device can be very compact during transport or placement which allows it to be placed in tight spaces. The device may have a maximum weight of at most 35 kg, in particular at most 23 kg. If multiple frame sections are provided for, each section may as such weigh at most 35 kg, preferably at most 23 kg, yet it is also possible that the sections weight at most 35 kg, preferably at most 23 kg in total. Preferably, the driving section subframe is composed out of a pair of mutually connectable or connected portions, such as a bottom portion and a top portion. The top portion may be coupled releasably to the bottom portion of the driving section subframe. Preferably, the bottom driving roll(s) are connected or connectable, optionally via an insert, to the bottom portion. It is conceivable that the bottom drive roll(s) form the highest portion of the bottom portion of the driving section subframe, this allows for easier installation and removal of the device.

The drive section may comprise at least two rotatably mounted bottom rolls. This may increase the grip of the drive section for feeding of the cable. The at least two bottom rolls may be mutually connected through a transmission. This may allow the bottom wheels to be driven simultaneously. The latter may reduce slip. Optionally, at one, preferably each, bottom drive roll is arranged in a bottom drive insert, wherein said insert is connected or connectable to a frame of the drive section. By arranging the bottom drive roll(s) in a replaceable insert, maintenance is substantially simplified. Preferably, the bottom drive roll is arranged in the insert via at least one bearing.

A drive unit, such as a motor, may be configured for driving of at least one drive roll, preferably a bottom drive roll. It is also possible that the drive unit may drive a top roll. Preferably, at least one drive unit is a servomotor. If a plurality of devices according to the invention are used, it may be achieved by using a servomotor that the devices are accurately managed in driving speed with respect to each other. This reduces, or eliminates, differences in feeding speeds for the mutual devices. The device, in particular the drive unit, is powered by a single cable, which cable comprises both power lines and signal lines. It is imaginable that multiple devices may be coupled to the same, single, cable. As such, synchronized devices can be more easily achieved. Preferably, a power source and optionally a PLC is coupled to said single cable at a distance from the device, allowing for a compact form factor of the device as such, which does not require an internal power source. Not only that, it also provides that in the room where the device is positioned, only a 48V power is present, which increases safety. It is imaginable that the device further comprises a control module, which is configured for controlling a drive unit of the device. The control module is configured for controlling the drive unit in at least two different drive speeds and/or drive directions. Preferably, the control module is a remote control module. This allows a user to be outside the tight space where the device is placed. The speed of the drive unit may be adjusted by the control unit via a button, wherein in particular a degree of actuation of said button is related to the drive speed selected.

It is imaginable that the device comprises, in addition to the at least one drive roll for driving the cable, a pair of lateral rolls, which in inserted position of a cable engage with lateral sides of said cable. Preferably, the rotational axis of said lateral rolls is substantially perpendicular to the drive roll. Typically, the drive roll rotates around a horizontal axis, whereas the lateral rolls may rotate around a vertical axis. This may contribute to a more fixated position and hence better grip, on the cable. It is also conceivable that the device comprises two pairs of lateral rolls, wherein said pairs are positioned at a mutual distance in a length direction of the cable. Preferably, said lateral rolls are positioned at an upstream and a downstream side of the drive roll. The lateral rolls particularly allow for proper straightening of a cable due to the improved grip on a cable that can be achieved. The pair of lateral rolls may comprise a pinch adjuster, for allowing to adjust a pinch, preferably dynamically. The pinch may be seen as the distance between the rolls, and hence adjusting the pinch with the pinch adjuster allows for accommodating various dimensions of cables.

At least one of the cable engaging drive rolls, in particular the upper drive roll, may be releasably mounted at a distance with respect to the other drive roll, in particular with respect to the at least one bottom drive roll. Since a drive roll is releasable, it is easier to place a cable between the rolls. Especially for use in tight spaces this is beneficial since it allows for placing the cable onto the bottom roll whilst a top roll is detached, and after placement of the cable in the device, in particular the drive section, the top roll may be reattached. The device may comprise at least two upper drive rolls, preferably releasably mounted to a drive section subframe or a frame of the device. The upper drive rolls may be mounted to a mounting frame, said mounting frame being releasable with respect to the drive section. The subframe may be releasably connected to the drive section subframe or the frame of the device. Two pair of opposing wheels allows for a stable grip on the cable. Especially if the two bottom wheels are coupled through a transmission. Additionally or alternatively the lateral rolls may be releasably mounted at a distance with respect to the drive roll. Since the lateral rolls are releasable, it is easier to place a cable in the device. Especially for use in tight spaces this is beneficial since it allows for placing the cable onto the bottom roll whilst the lateral rolls are detached, and after placement of the cable in the device, in particular the drive section, the lateral rolls may be reattached. The device may comprise at least two lateral rolls, preferably releasably mounted to a drive section subframe, such as a top portion, or a frame of the device. The lateral rolls may be mounted to a mounting frame, said mounting frame being releasable with respect to the drive section. The subframe may be releasably connected to the drive section subframe or the frame of the device. The combination of a bottom drive roll and a pair of lateral rolls allows for a stable grip on three parts of the cable.

The at least one drive section may comprise a tensioning element, for adjusting a feeding nip between the upper roll and bottom roll, such that a pressure exerted by the drive rolls onto the cable is adjustable. This not only allows for accounting for weather conditions which may cause the cable to be wet, it may also provide for a more stable feeding of the cable in the feeding direction. The tensioning element may be manually and/or automatically. The drive section may comprise at least one actuator for adjusting the feeding nip. By using an actuator it is not required for a working person to be present next to the device for adjusting the feed nip.

The aiming section may comprise at least one actuator, for adjusting a position of the aiming roll. This may provide for dynamically adjusting a cable exit direction. It is preferred to adjust the exit direction of the cable by means of an actuator since it may be the case that the bending radius is not constant, due to various influences. By adjusting the exit direction by means of an actuator, minor fluctuations in the bending radius may be counteracted.

The device may have a maximum height and/or width of 75 cm, preferably a maximum height of 50 cm, more preferably a maximum height of 30 cm. This in particular allows the device to be transported into very tight areas. It may be conceivable that the entire device may have a maximum height and/or width of 75 cm, preferably a maximum height of 50 cm, more preferably a maximum height of 30 cm. It is also possible that each of the drive section, bending section, and aiming section may have a maximum height and/or width of 75 cm, preferably a maximum height of 50 cm, more preferably a maximum height of 30 cm.

The aiming section may be configured for aiming a cable output into a direction which is substantially orthogonal with respect to the feeding direction. This may also allow the device to be used in different (tight) locations where a cable needs to make an e.g., 90-degree turn.

The aiming roll may be releasably mounted onto the aiming section, preferably wherein the aiming roll is releasably mounted to a frame of the device or an aiming section subframe. The aiming roll may be mounted to a mounting frame, said mounting frame being releasably mounted to the aiming section in particular a frame or aiming subframe. This allows the cable to be placed, in particular if the drive section is also releasable (at least the upper rolls) before the aiming roll is placed onto the device, which may make initial placement of the cable easier.

At least one roll, in particular at least one drive roll, may be at least partially composed of natural rubber and/or synthetic rubber. This may allow for a good grip for driving of the cable. At least one roll, in particular at least on bending roll and/or aiming roll, may be at least partially composed of nylon. The latter may prevent friction to be significantly increased, which may reduce the total amount of energy needed for bending and driving of the cable. A friction coefficient of a contact between a cable and at least one drive roll may be larger than a friction coefficient of a contact between said cable and the bending roll and/or aiming roll.

The drive section may be configured for feeding a cable in a forward and a backward direction, towards and away from the bending section and aiming section. This allows e.g., for repositioning of a cable. For example if the exit location and/or direction is not as desired, the device may retract the cable partially in order for it to be subsequently fed again (e.g., after adjustment of the aiming roll).

The device may be at least partially remote controlled. It is also conceivable that the device comprises wheels, preferably driven wheels. More preferably wherein the wheels are remotely controllable. The latter may allow the device to be driven into a preferred location, which may eliminate the need for a human to enter the tight space during placement of the device. Once place, however, it may also be preferred for the device to be remote controlled since it may allow for minor adjustments in the feeding speed, the exit direction of the cable during operation of the device. At least a bending radius may be remotely adjustable, in particular wherein the position of the bending roll is remotely adjustable. This may allow for adjusting the required bend without a person needing to enter the tight space.

The device may comprise an emergency button, wherein said emergency button instantaneously stops the feeding movement induced to a cable by the device. This may allow the device to be stopped in case of a dangerous situation.

The device may be configured for bending and feeding of electricity cables. The electricity cable comprises a substantially solid conductive core material. The core material of the cable may have a thickness of about 100 mm^2 to 1200 mm^2, in particular about 630 mm^2. The core material may be at least partially composed of aluminium. The electricity cable may comprise a shielding or shielding layer. The shielding may comprise at least one polymer layer, preferably a crosslinked polyethylene layer. The cable may be an electricity cable. The electricity cable may be rated to a conduct a current of 10.000 V. It is conceivable that the transformer building transforms the 10.000 V supplied by the cable into a current of about 240 V for use in houses and powering domestic appliances.

The bending section may be configured for plastically deforming the at least one cable. Hence, the applied radius will remain in the cable, even after the cable is removed from the device. The aiming section may be configured for at least temporarily elastically deforming the at least one cable. The aiming section may ensure that the cable is oriented in such a way that the cable is at a preferred exit location and exit direction.

The bending section may be configured for providing a bending radius situated between 500 mm and 1500 mm. The bending section may be configured for applying a bending force of at least 1000 N, preferably at least 1400 N, to the cable.

Optionally, the device further comprises at least one lateral guiding section, which may form, or coincide with, the lateral rolls as described above, preferably at least two lateral guiding sections, wherein at least one lateral guiding section comprising at least two spaced apart and opposing guide rolls, for mutually engaging with the at least one cable. The guide rollers of the lateral guiding section are preferably arranged at an angle with respect to the bend and/or drive rollers, in particular orthogonally. It is imaginable that at least one lateral guiding section is arranged downstream of the drive section and upstream of the bending section and/or upstream of the drive section. The guide rollers may be adjustable. The guide rollers are preferably resiliently connected to a frame part. Preferably at least one pair of guide rollers engages with the cable in proximity of at least one bending roller. Hence, where reference is made to a lateral roll, this may alternatively be referred to as a lateral guide roll and vice versa.

According to a preferred embodiment, the device comprises a fixation structure, wherein the fixation structure is configured to engaging with one or more external walls, such that the device is locked or engaged in a room. The fixation structure may be attached or attachable to a part of the frame of the device, and may be moveable relative to said frame, in particular in vertical direction, for engaging with a ceiling. The fixation structure may engage with a floor and ceiling of a room wherein the device is placed. The fixation structure in particular releasably engages with said floor and ceiling, optionally under a certain pretention. This may avoid movement of the device upon feeding or pulling of the cable which may induce certain forces to the device. Hence, ensuring feeding or pulling of the cable rather than moving the device itself, which is not preferred. The fixation structure may be composed of one or more frames, which frames may be mountable to the frame of the device, wherein mutual frame parts are moveable to adjust according to a ceiling height. The fixation structure may comprise a first frame part, which may be substantially U-shaped, wherein the U-shaped first frame part is accommodated over the device, and wherein a second frame part is attached to the U-shaped first frame part. The second frame part is preferably adjustable and sits between the U-shaped first frame part and the ceiling. Particularly, a length of the second frame part is adjustable such as to urge the device into a fixed position.

The present invention is also related to the use of the device according to the present invention, in particular in a tight and/or restricted space.

The present invention will hereinafter be further elucidated based on the following non-limitative drawing wherein:
- figure 1 shows a perspective view of an embodiment of the invention;
- figure 2 shows a perspective view of a detail of the present invention;
- figure 3 shows an exploded side view of an embodiment of the present invention;
- figure 4 shows a perspective view of an embodiment according to the present invention;
- figures 5a and 5b show two embodiments of the present invention during use;
- figures 6a and 6b show an alternative embodiment of the device; and
- figure 7 shows a schematic perspective view of another embodiment.

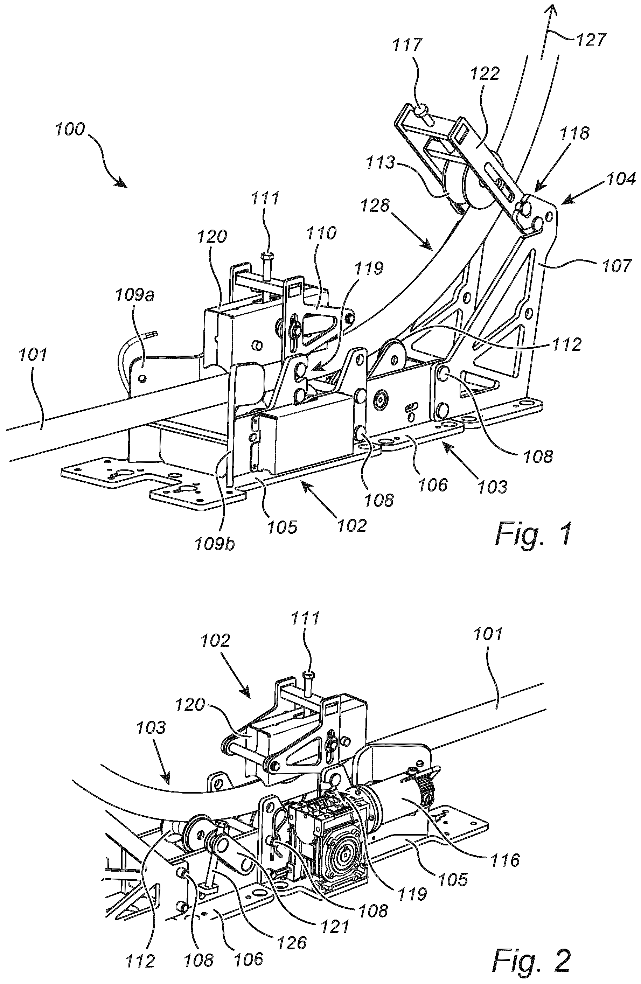

Figure 1 shows the device 100 according to a non-limitative embodiment. The cable 101 is an electricity cable, but may be any other cable. The device 100 comprises a drive section 102, a bending section 103, and an aiming section 104. The device is formed also by mutually mounted 108 drive section subframe 105, bending section subframe 106 and an aiming section subframe 107. The subframe sections may as shown be connected by mounting elements 108 such as bolts. The drive section 105 comprises two cable flanges 109a, 109b, for allowing an easy entry of the cable 101 into the device 100. In a roll casing 120 two upper rolls (not shown in this figure) are arranged. The mounting frame **110** which mounts the upper rolls and casing 120 to the drive section frame 105 may be mounted via a releasable coupling 119. To this end, the mounting frame **110** may be provided with co-acting coupling elements 119 to co-act with a coupling element of the drive section frame 105. The drive section comprises a tensioning element **111,** which may adjust the feeding nip, i.e., the height of the upper rolls. Downstream of the drive section 102 a bending section 103 is arranged. The bending section comprises a bending roll 112. The bending roll, or at least a contact portion which is in contact with the cable 101, is arranged at a higher level compared to lower drive rolls. This induces a radius 128 onto the cable 101 which is preferably plastically bended. Attached to the bending section subframe 106 is an aiming section subframe 107. Said aiming section 104 comprises an aiming roll 113, which is arranged on the opposite side of the cable 101 compared to the bending roll 112, such as to steer the output direction 127 of the cable 101. The output direction or exit direction 127 of the cable may be adjusted by adjusting the position of the aiming roll 113, for example by means of the element 117, which is a bolt in this instance but may also be an actuator. The aiming roll 113 is releasably coupled 118 to the aiming section subframe 107 by means of a releasable coupling 118.

Figure 2 shows a detail of the drive section 102 and the bending section 103 of a device 100 according to the invention. The drive section 102 comprises a drive 116, which is a motor 116, to drive at least one drive roll (not shown in this figure). Here, the tensioning element **111** is shown to be a bolt **111,** which may be adjusted such as to increase or decrease a feed nip between opposing drive rolls. The bolt **111** may also be an actuator. The upper drive rolls are covered by a casing 120 such as to protect the upper rolls. This figure shows the releasable coupling 119 which allows the mounting frame 123 of the upper rolls to be detached from the drive section subframe 105. This figure also indicates the mounting element 108 which mutually attaches the drive section subframe 105 to the bending section subframe 106. The bending section 106 also comprises an position adjustment element 126, 121. In this example, a bolt 126 may be adjusted which adjusts, via a subframe 121, the position of the bending roll 112 in a height direction. The roll may also be an actuator to adjust the position, i.e., height, of the bending wheel 112.

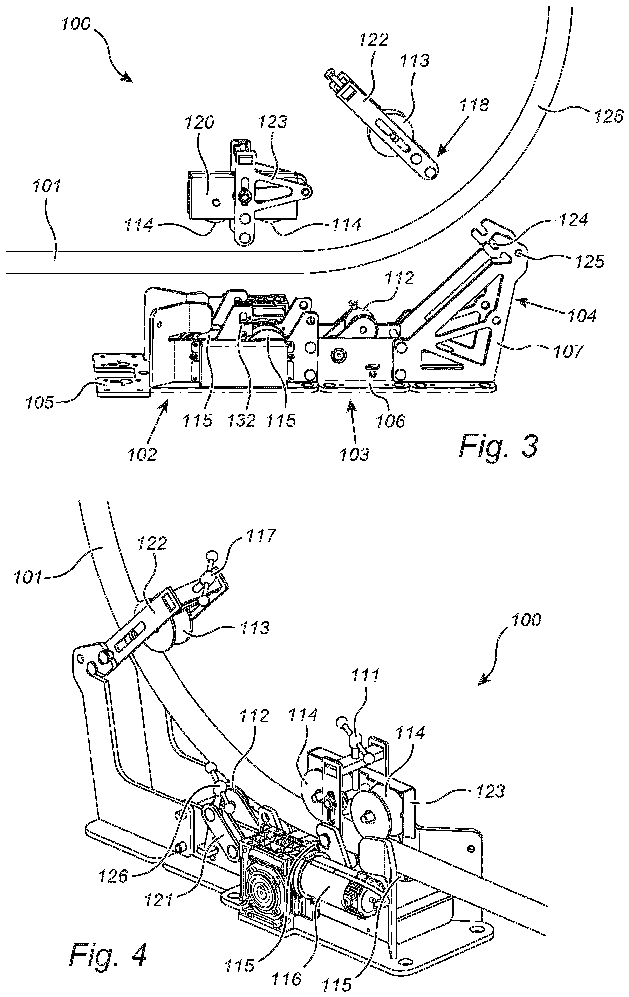

Figure 3 shows an exploded side view of the device 100. Here, the bending radius 128 is clearly seen. The aiming section subframe 107 here comprises coupling profiles 124, 125, configured to co-act with coupling elements 118 of the aiming roll mounting frame 122. The aiming roll 113 is rotatably mounted to the aiming roll mounting frame 122. Here, the mounting frame 123 of the upper rolls 114 of the drive section is visible. The drive section subframe 105 comprises coupling elements 132 to co-act with coupling elements 131 of the mounting frame 132. Here the co-acting coupling elements may be formed by a female portion 126, and a male portion 131. The bottom drive rolls 115 are arranged adjacent to one another.

Figure 4 shows an embodiment of the device 100 according to the invention. The device 100 does not comprise a cover over the upper drive rolls 100, and hence the mounting frame 123 of the upper drive rolls 114 is visible from the outside. Via an tensioning element 111 the feed nip, i.e., the distance between the upper drive rolls 114 and the bottom drive rolls 115 can be adjusted. As such, it may be accounted for if the cable 101 is wet due to weather conditions or the like. Here, a motor 116 may for the drive unit 116 which may be connected to drive one of the bottom drive rolls 115. The bottom drive rolls 115 may be mutually connected through a transmission, such that driving one bottom drive roll 115 causes also the other bottom drive roll 115 to rotate. The bending section 106 also comprises an position adjustment element 126, 121. In this example, a bolt 126 may be adjusted which adjusts, via a subframe 121, the position of the bending roll 112 in a height direction. The bending roll 112 may also be an actuator to adjust the position, i.e., height, of the bending roll 112.

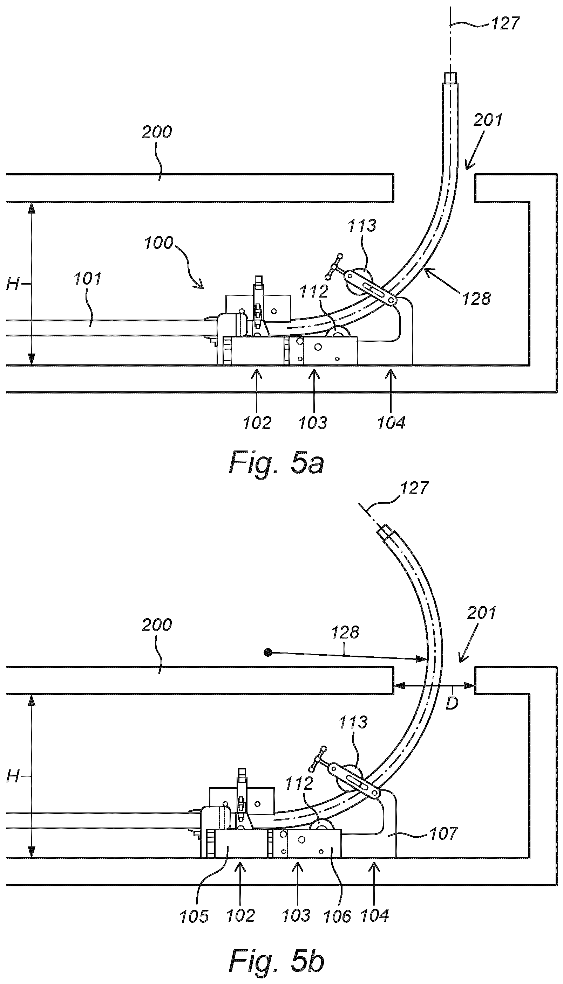

Figures 5a and 5b show the device 100 according to the present invention which is used in a basement 200 or crawl space 200. Figure 5a shows an embodiment where the aiming section 104 is used for aiming the cable exit direction 127 in an upright direction 127. The aiming section allows the device 100 to aim the cable 101 through a hole 201 with a size D of the tight space 200. In figure 5a the exit direction 127 is substantially vertical, whereas in figure 5b the aiming section 104 aims the cable 101 in a backward direction 127. The bending radius 128 in figures 5a and 5b may be the same, hence only the exit direction is changed. However, the invention is not limited to the bending radius 128 indicated in the figures. The device 100 is placed in a tight space with a limited height H. The height H may for example be at most 1 m, or 75 cm, or 50 cm. Hence, the device 100 is compact. The device 100 may be installed in the tight space 200 for example due to the size of the device, or due to the size of the drive section 102, bending section 103, and aiming section 104.

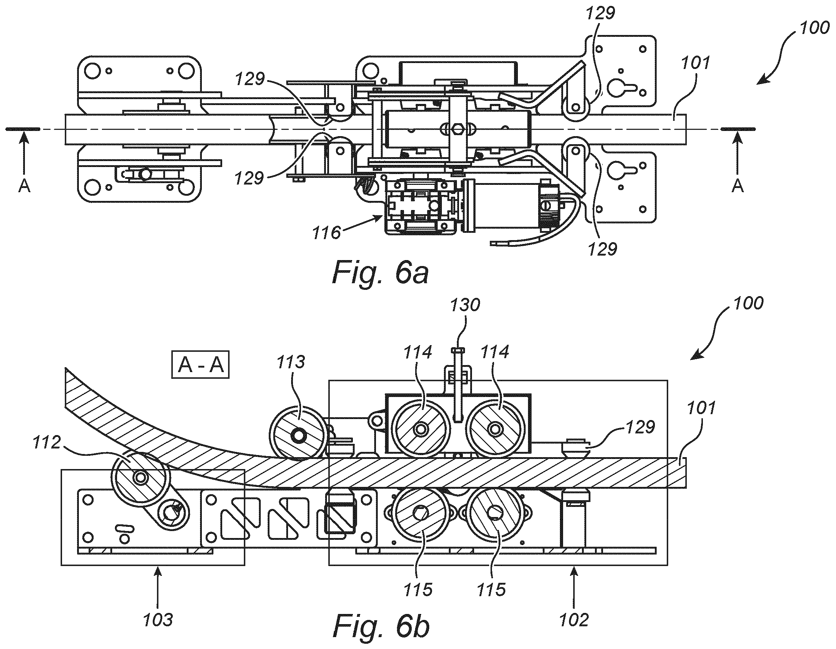

Figures 6a and 6b show a top view, and a (cross sectional) side view of the device 100 according to the invention. Here, the same reference numbers have been used for the same components as described above. Here, the device is provided with tw pairs of lateral rolls 129, of which in figure 6b only one is visible. The lateral rolls 129 may be provided in addition to the upper rolls 114 or instead of the upper rolls 114. The lateral rolls 129 allow for preventing lateral slip of the cable when running through the device 100. This allows for improved handling and more control.

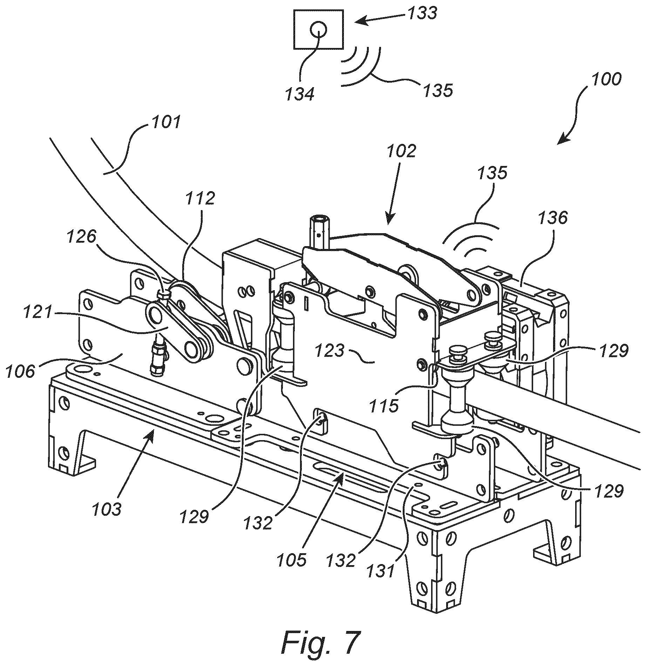

Figure 7 shows yet another embodiment of the device 100, which does not comprise upper rolls, but only driven bottom rolls 115 and two pair of opposing lateral rolls 129. The pairs of lateral rolls 129 are arranged at an upstream and downstream side of the drive rolls 115. The device 100 according to this embodiment does not comprise an aiming section 104, which for some instances is beneficial as it provides for even lower heights of the device. The driving section subframe 105 in this figure is composed out of a pair of mutually connectable or connected portions 123, 131, such as a bottom portion 131 and a top portion 123 as shown in this embodiment. The top portion may be coupled releasably to the bottom portion of the driving section subframe. The bottom driving roll(s) 115 are connected or connectable, optionally via an insert (not visible), to the bottom portion 131 of the driving section subframe 105. It is conceivable that the bottom drive roll(s) 115 form the highest portion of the bottom portion of the driving section subframe, this allows for easier installation and removal of the device. The lateral rolls 129 are releasably mounted to a drive section subframe 105, here to a top portion 123 of said subframe 105 of the device 100. The lateral rolls 129 may be mounted to a mounting frame 123, said mounting frame 123 being releasable with respect to the drive section 102. The combination of a bottom drive roll 115 and a pair of lateral rolls 129 allows for a stable grip on three parts of the cable. The bending section 103 shown in this embodiment is particularly mountable to the device 100 via a bending section subframe 106, which may be connectable to an upstream or downstream part of the drive section 102. This allows for more versatile application of the device 100 by a user. The device 100 may be controllable via a remote control module 133, which may comprise a button 134 for adjusting a speed of the motor (not visible in this figure) in for example direction and/or speed. The remote control module 133 is configured to communicate, preferably wirelessly 135, with a part 136 of the device 100.

The above-described inventive concepts are illustrated by several illustrative embodiments. It is conceivable that individual inventive concepts, including inventive details, may be applied without, in so doing, also applying other details of the described embodiments. It is not necessary to elaborate on examples of all conceivable combinations of the above-described inventive concepts, as a person skilled in the art will understand numerous inventive concepts can be (re)combined in order to arrive at a specific application and/or alternative embodiment.

The ordinal numbers used in this document, like "first", "second", and "third" are used only for identification purposes. Hence, the use of expressions like a "second" component, does therefore not necessarily require the co-presence of a "first" component. By "complementary" components is meant that these components are configured to co-act with each other. However, to this end, these components do not necessarily have to have complementary forms. The verb "comprise" and conjugations thereof used in this patent publication are understood to mean not only "comprise", but are also understood to mean the phrases "contain", "substantially consist of", "formed by" and conjugations thereof.

## Claims

1. **A device** for driving and bending and/or straightening of at least one cable, in particular an electricity cable, more in particular for use in tight and/or spaces with limited height comprising:
- at least one drive section, for forcing of a cable in a feeding direction comprising;
∘ at least one, preferably at least two spaced apart, and more preferably opposing drive rolls, such as a bottom drive roll and an upper drive roll and/or a pair of opposing lateral rolls, for mutually engaging with the at least one cable, wherein at least one drive roll, preferably at least one of the at least two drive rolls, is driven,
- at least one cable bending section, located downstream of the at least one drive section and comprising at least one bending roll,
wherein the position of the bending roll is adjustable, in particular a height of the at least one bending roll with respect to the drive rolls, for allowing of adjusting the bending radius of the at least one cable.

2. Device according to claim 1, wherein the drive section comprises at least two rotatably mounted bottom rolls and/or wherein the drive section comprises at least one pair of opposing lateral rolls, preferably a pair of opposing lateral rolls, preferably wherein the at least two bottom rolls are mutually connected through a transmission.

3. Device according to any of the preceding claims, wherein a drive unit, such as a motor, is configured for driving of at least one drive roll, preferably a bottom drive roll.

4. Device according to any of the preceding claims, wherein at least one of the cable engaging drive rolls, in particular the upper drive roll, is releasably mounted at a distance with respect to the other drive roll, in particular with respect to the at least one bottom drive roll, preferably wherein the device comprises at least two upper drive rolls, preferably releasably mounted to a drive section subframe or a frame of the device, and/or wherein the upper drive rolls are mounted to a mounting frame, said mounting frame being releasable with respect to the drive section.

5. Device according to any of the preceding claims, wherein the at least one drive section comprises a tensioning element, for adjusting a feeding nip between the upper roll and bottom roll, such that a pressure exerted by the drive rolls onto the cable is adjustable, preferably wherein the drive section comprises at least one actuator for adjusting the feeding nip.

6. Device according to any of the preceding claims, wherein the device comprises a frame, wherein the drive section, bending section, and aiming section are mounted to, or form part of, said frame, preferably wherein the frame is formed by a driving section subframe, a bending section subframe, and an aiming section subframe which are mutually connected or connectable.

7. Device according to any of the preceding claims, wherein at least one roll, in particular at least one drive roll, is at least partially composed of natural rubber and/or synthetic rubber and/or wherein at least one roll, in particular at least on bending roll and/or aiming roll, is at least partially composed of nylon and/or wherein a friction coefficient of a contact between a cable and at least one drive roll is larger than a friction coefficient of a contact between said cable and the bending roll and/or aiming roll.

8. Device according to any of the preceding claims, wherein the drive section is configured for feeding a cable in a forward and a backward direction, towards and away from the bending section and aiming section.

9. Device according to any of the preceding claims, wherein the device is at least partially remote controlled, preferably at least a drive speed of the device, in particular via at least one control module.

10. Device according to any of the preceding claims, wherein at least a bending radius is remotely adjustable, in particular wherein the position of the bending roll is remotely adjustable and/or wherein the device comprises an emergency button, wherein said emergency button instantaneously stops the feeding movement induced to a cable by the device.

11. Device according to any of the preceding claims, wherein the device is configured for bending and feeding of electricity cables, preferably wherein the electricity cable comprises a substantially solid conductive core material and/or wherein core material is at least partially composed of aluminium and/or wherein the electricity cable comprises a shielding, preferably wherein the shielding comprises at least one polymer layer, preferably a crosslinked polyethylene layer.

12. Device according to any of the preceding claims, wherein bending section is configured for plastically deforming the at least one cable.

13. Device according to any of the preceding claims, wherein the bending section is configured for providing a bending radius situated between 500 mm and 1500 mm.

14. Device according to any of the preceding claims, further comprising at least one lateral guiding section, preferably at least two lateral guiding sections, wherein at least one lateral guiding section comprising at least two spaced apart and opposing guide rolls, for mutually engaging with the at least one cable, preferably wherein at least one lateral guiding section is arranged downstream of the drive section and upstream of the bending section and/or upstream of the drive section.

15. Device according to any of the preceding claims, further comprising:
at least one cable aiming section, preferably located downstream of the at least one bending section, for adjusting of a cable output direction, preferably wherein said at least one cable aiming section comprises at least one aiming roll, in particular wherein a position of said aiming roll with respect to the cable is adjustable, wherein said aiming roll and bending roll are configured to engage with a cable at mutually opposing sides of said cable, preferably wherein the aiming section comprises at least one actuator, for adjusting a position of the aiming roll and/or wherein the aiming section is configured for aiming a cable output into a direction which is substantially orthogonal with respect to the feeding direction.
